# EUROPÄISCHE PATENTSCHRIFT

(11) **EP 2 652 856 B1**
(45) Veröffentlichungstag und Bekanntmachung des Hinweises auf die Patenterteilung: **19.12.2018**
(21) Anmeldenummer: 12721423.7
(22) Anmeldetag: 28.03.2012
(51) Int. Cl.: H02J 3/14

(54) **STEUERGERÄT UND VERFAHREN ZUR STROMGÜTEBASIERTEN ENERGIEVERBRAUCHSREGELUNG**
CONTROL UNIT AND METHOD FOR CURRENT-QUALITY-BASED ENERGY CONSUMPTION REGULATION
APPAREIL DE COMMANDE ET PROCÉDÉ POUR RÉGULER LA CONSOMMATION D'ÉNERGIE D'APRÈS LA QUALITÉ DU COURANT

(30) Priorität: 05.04.2011 DE 102011006770
(43) Veröffentlichungstag der Anmeldung: 23.10.2013
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2012/055459
(87) Internationale Veröffentlichungsnummer: WO 2012/136524

(56) Entgegenhaltungen:
- WO-A1-97/37415
- DE-A1-102008 057 563
- DE-A1-102009 027 802

## Beschreibung

Die vorliegende Erfindung bezieht sich auf ein Steuergerät und ein Verfahren zur stromgütebasierten Energieverbrauchsregelung.

### Stand der Technik

Energieerzeugung entwickelt sich immer mehr in Richtung dezentraler Energieerzeugung, bei der unter anderem die Ausnutzung von regenerativen Energiequellen wie Windkraft, Solarenergie oder auch Kraftwärmekopplungs-Kraftwerken (KWK-Kraftwerke) eine zunehmende Rolle spielen. Dabei kann ein Energiemarkt geschaffen werden, bei dem jeder Verbraucher sowohl als Anbieter als auch als Käufer auftreten kann. In einen solchen Energiemarkt kann nicht nur von Seiten der Energieerzeuger steuernd eingegriffen werden, sondern auch von Seiten des Abnehmers durch eine dynamische Steuerung des Energieverbrauchs.

Zu herkömmlichen Spitzenlastzeiten, in Privathaushalten beispielsweise zur Mittagszeit oder gegen Abend, werden üblicherweise große Mengen an Strom nachgefragt, so dass eine Energieversorgung aller Abnehmer mit Schwierigkeiten behaftet sein kann. Ziel ist es nun, diese Spitzenlastzeiten (Peaks) zu entzerren und den Strombedarf zeitlich gleichmäßiger zu verteilen. Eine mögliche Maßnahme hierzu ist es, dynamische Stromtarife anzubieten, die von intelligenten Stromverbrauchern genutzt werden können, um den Zeitpunkt ihres Stromverbrauchs an das Marktumfeld und insbesondere an den Strompreis anpassen zu können. Ein Strombezug wird zu den Zeiten angestrebt, zu denen der Strompreis gerade niedrig ist.

Über Angebot und Nachfrage kann damit ein Steuerungsmechanismus geschaffen werden, so dass Strom vor allem dann bezogen wird, wenn die Gesamtstromversorgung unkompliziert ist, das heißt, beispielsweise zu Nebenlastzeiten. Bei einem Versorgungsengpass muss die Stromerzeugung verstärkt oder die Stromabnahme reduziert werden, um das Stromversorgungsnetz zu stabilisieren.

Die Druckschrift DE 10 2009 027 802 betrifft einen Betrieb eines Haushaltsgerätes unter Berücksichtigung der Frequenz eines Energieversorgungsnetzes. Unterschreitet die Frequenz der Versorgungsspannung einen definierten Schwellwert, so wird Haushaltsgerätes abgeschaltet oder mit reduzierter Leistung betrieben oder der Betrieb des Haushaltsgerätes wird für eine vorbestimmte Zeit unterbunden.

Die Druckschrift WO 97/37415 betrifft ein Energieversorgungsnetzwerk, an das Verbraucher über frequenzgesteuerte Relais angeschlossen sind. Eine übergeordnete Einheit gibt die Parameter vor, basierend auf denen die frequenzgesteuerten Relais die angeschlossenen Verbraucher aktivieren oder deaktivieren.

Druckschrift DE 10 2008 057 563 A1 betrifft eine Optimierung eines Energieversorgungsnetzes durch Variation des aktuellen Strompreises. Eine übergeordnete Stelle passt die Tarifstruktur für den Strombezug basierend auf der aktuellen Netzsituation an und teilt dies den angeschlossenen Verbrauchern mit. Daraufhin können die Verbraucher ihr Verbrauchsverhalten unter Berücksichtigung minimaler Stromkosten modifizieren.

Bei bekannten Verfahren müssen dazu Stromabnehmergeräte mit einer gewissen Kommunikationsfunktionalität ausgestattet werden, um Preisinformationen und Schaltbefehle empfangen zu können. Dazu ist beispielsweise eine Datenschnittstelle mit entsprechender Kommunikationseinrichtung für die Kommunikation mit einem Strommarktnetz notwendig. Dies macht derartige Netzwerke aufwändig und teuer, da neben der Kommunikationsnetzinfrastruktur, des sogenannten Smart-Energy-Grids, auch jedes Stromabnehmergerät mit Kommunikationsmitteln ausgerüstet werden muss. Außerdem ist zumindest zu bestimmten Zeitpunkten eine Online-Verbindung von jedem Stromabnehmergerät zu einem zentralen System notwendig, um die entsprechenden Tarifinformationen und Schaltbefehle verteilen zu können.

Es besteht daher ein Bedarf nach einfacher zu realisierenden Möglichkeiten, auf Abnehmerseite steuernd in den Energiemarkt eingreifen zu können.

### Zusammenfassung der Erfindung

Eine Idee der vorliegenden Erfindung ist es, Parameter der Stromversorgung lokal an dem jeweiligen Stromabnehmergerät zu messen und damit Rückschlüsse auf die momentane Stromgüte zu ziehen. Die ermittelte Stromgüte lässt ihrerseits Rückschlüsse auf die momentane Belastung des Stromnetzes zu, so dass bei mangelhafter Stromgüte davon ausgegangen wird, dass die momentane Stromversorgungslage schwierig ist. Je nach ermittelter Stromgüte kann ein Stromabnehmergerät dann entsprechend seines Stromverbrauchs angesteuert werden, um das Stromnetz nur bzw. vorzugsweise zu den Zeiten zu belasten, zu denen die Stromversorgungslage entspannt ist. Hierzu können verschiedene Energieverbrauchsregeln vorbestimmt werden, die auf das Stromabnehmergerät zugeschnitten sind und eine stromgütebasierte Ansteuerung des Stromabnehmergeräts zulassen.

Eine Ausführungsform der vorliegenden Erfindung besteht daher in einem Verfahren zum stromgütebasierten Regeln eines Energieverbrauchs eines Stromabnehmergeräts, mit den Schritten des Erfassens von Parametern der Stromversorgung des Stromabnehmergeräts, des Ermittelns einer Stromgüte auf der Basis der erfassten Parameter, des Auswählens einer Vielzahl von Energieverbrauchsregeln auf der Basis der ermittelten Stromgüte, und des Ansteuerns des Stromabnehmergeräts auf der Basis der ausgewählten Energieverbrauchsregel.

Vorzugsweise kann dabei ein Vergleichen der ermittelten Stromgüte mit einem vorbestimmten Stromgüteprofil zum Ermitteln eines Sollwertparameters erfolgen, so dass das Auswählen einer Energieverbrauchsregel auf der Basis des ermittelten Sollwertparameters erfolgen kann. Auf diese Weise kann eine Abstufung der Stromgüte in Klassifikationsstufen erfolgen, so dass vorbestimmte Energieverbrauchsregeln verschiedenen Stromgüteklassen zugeordnet werden können. Die Abstufung der Stromgüte kann durch ein variabel einstellbares Stromgüteprofil an das jeweilige Einsatzgebiet des Verfahrens angepasst werden.

Die Energieverbrauchsregeln können vorteilhafterweise ein Starten des Stromabnehmergeräts, ein Betreiben des Stromabnehmergeräts bei begrenztem Strombezug, ein Betreiben des Stromabnehmergeräts im Standby-Betrieb und/oder ein Betreiben des Stromabnehmergeräts für eine begrenzte Zeitspanne umfassen, aus welchen eine Energieverbrauchsregel ausgewählt werden kann.

Vorzugsweise können externe Steuerungsdaten zum Ansteuern des Stromabnehmergeräts erfasst werden, beispielsweise von einer externen Smart-Energy-Grid-Schnittstelle, wobei das Auswählen einer Energieverbrauchsregel in Abhängigkeit von den externen Steuerungsdaten erfolgen kann. Dadurch lässt sich das erfindungsgemäße dezentrale Steuerungsverfahren mit einem zentralen und kommunikationsgesteuerten Energieverbrauchssteuerungsverfahren in idealer Weise kombinieren.

Gemäß einer weiteren Ausführungsform schafft die Erfindung eine Steuereinrichtung zum stromgütebasierten Regeln eines Energieverbrauchs eines Stromabnehmergeräts, mit einer Erfassungseinrichtung, welche dazu ausgelegt ist Parameter der Stromversorgung des Stromabnehmergeräts zu erfassen, einer Ermittlungseinrichtung, welche dazu ausgelegt ist, eine Stromgüte auf der Basis der erfassten Parameter zu ermitteln, einer Auswahleinrichtung, welche dazu ausgelegt ist, eine einer Vielzahl von Energieverbrauchsregeln auf der Basis der ermittelten Stromgüte auszuwählen, und einer Ansteuereinrichtung, welche dazu ausgelegt ist, das Stromabnehmergerät auf der Basis der ausgewählten Energieverbrauchsregel anzusteuern.

Das Stromabnehmergerät kann vorzugsweise einen elektrischen Energiespeicher eines elektrisch betriebenen Fahrzeugs, eine Ladesäule für elektrische betriebene Fahrzeuge, ein Haushaltsgerät, eine Wärmepumpe, eine Klimaanlage oder eine Heizanlage umfassen.

Gemäß einer weiteren Ausführungsform kann eine erfindungsgemäße Steuereinrichtung in einem Stromabnehmergerät mit einer Energieverbrauchsregeleinrichtung integriert sein, wobei die Energieverbrauchsregeleinrichtung dazu ausgelegt ist, in Abhängigkeit von einer durch die Steuereinrichtung ausgewählten Energieverbrauchsregel die Energieversorgung des Stromabnehmergeräts zu steuern.

Gemäß einer weiteren Ausführungsform schafft die Erfindung ein System zum stromgütebasierten Regeln des Energieverbrauchs einer Vielzahl von Stromabnehmergeräten, mit einer erfindungsgemäßen Steuereinrichtung und einer Vielzahl von Stromabnehmergeräten, für welche die Steuereinrichtung spezifische Energieverbrauchsregeln in Abhängigkeit einer ermittelten Stromgüte und der Art des Stromabnehmergeräts auswählt.

Vorteilhafterweise kann dieses System als Hausanschlusssystem implementiert sein, wobei die Vielzahl von Stromabnehmergeräten Haushaltsgeräte, Klimaanlagen und/oder Heizanlagen eines Gebäudes umfasst, und die Steuereinrichtung dazu ausgelegt ist, die Stromgüte an einem Stromversorgungsanschluss des Gebäudes zu ermitteln.

Weitere Modifikationen und Variationen ergeben sich aus den Merkmalen der abhängigen Ansprüche.

### Kurze Beschreibung der Figuren

Verschiedene Ausführungsformen und Ausgestaltungen der vorliegenden Erfindung werden nun in Bezug auf die beiliegenden Zeichnungen genauer beschrieben, in denen
- Fig. 1: eine schematische Darstellung eines Verfahrens zur stromgütebasierten Energieverbrauchsregelung gemäß einer Ausführungsform der Erfindung;
- Fig. 2: eine schematische Darstellung eines Verfahrens zur stromgütebasierten Energieverbrauchsregelung gemäß einer weiteren Ausführungsform der Erfindung;
- Fig. 3: eine schematische Darstellung eines Verfahrens zur stromgütebasierten Energieverbrauchsregelung gemäß einer weiteren Ausführungsform der Erfindung;
- Fig. 4: eine schematische Darstellung eines Verfahrens zur stromgütebasierten Energieverbrauchsregelung gemäß einer weiteren Ausführungsform der Erfindung;
- Fig. 5: eine schematische Darstellung eines Stromabnehmergeräts mit einer Steuereinrichtung zur stromgütebasierten Energieverbrauchsregelung gemäß einer weiteren Ausführungsform der Erfindung;
- Fig. 6: eine schematische Darstellung eines Stromabnehmergeräts mit einer Steuereinrichtung zur stromgütebasierten Energieverbrauchsregelung gemäß einer weiteren Ausführungsform der Erfindung; und
- Fig. 7: eine schematische Darstellung eines Systems zur stromgütebasierten Energieverbrauchsregelung mit einer Steuereinrichtung und einer Vielzahl an Stromabnehmergeräten gemäß einer weiteren Ausführungsform der Erfindung zeigt.

Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Gleiche Bezugszeichen bezeichnen dabei gleiche oder ähnlich wirkende Komponenten.

### Ausführliche Beschreibung der Erfindung

Stromabnehmergeräte im Sinne der vorliegenden Erfindung umfassen alle Stromverbrauchseinrichtungen, welche über ein Stromnetz elektrische Energie zu ihrem Betrieb beziehen. Dabei können diese Stromverbrauchseinrichtungen dauerhaft oder temporär an das Stromnetz angeschlossen sein. Weiterhin sind Stromabnehmergeräte im Sinne der vorliegenden Erfindung hinsichtlich ihres Energieverbrauchsverhaltens zumindest in gewissem Rahmen steuerbar, das heißt, dass von außen steuernd in den zeitlichen Verlauf des Strombezugs der Stromabnehmergeräte eingegriffen werden kann, beispielsweise indem der Energieverbrauch vollständig abgeschaltet oder zumindest hinsichtlich der Verbrauchsmenge pro Zeiteinheit variabel eingestellt werden kann. Stromabnehmergeräte im Sinne der vorliegenden Erfindung können beispielsweise elektrische Energiespeicher eines elektrisch betriebenen Fahrzeugs wie zum Beispiel Akkumulatoren, Ladesäulen oder -stationen für elektrische betriebene Fahrzeuge, Systemanlagen, Maschinenkomponenten, Haushaltsgeräte wie Herde, Kühlschränke, Küchenmaschinen, Waschmaschinen, Spülmaschinen, Wäschetrockner, Fernseher, HiFi-Anlagen, Videorecorder, Multimediageräte, Computer, Klimaanlagen, Lüftungsanlagen, Bewässerungssysteme, Heizungsanlagen und ähnliche Geräte umfassen.

Im Folgenden können Parameter der Stromversorgung Spannungspegel, Stromstärkenpegel, Wechselstromfrequenz, Phasenstromfrequenz, Oberschwingungsamplitude, -frequenz und -phase, Phasenrauschen, Klirrfaktor, Netzimpedanz oder ähnliche Parameter umfassen, welche Rückschlüsse auf die Stromversorgung im Stromversorgungsnetz zulassen.

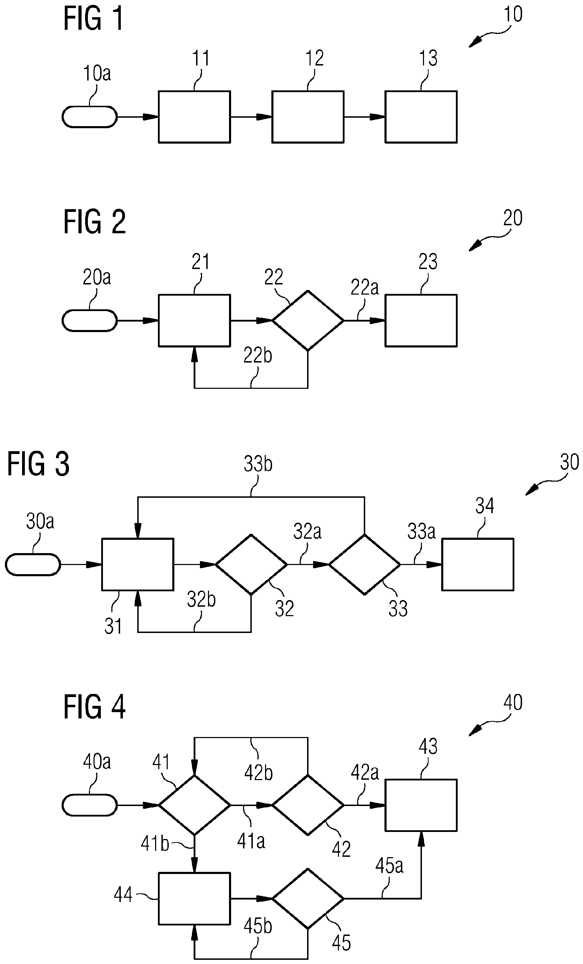

Fig. 1 zeigt eine schematische Darstellung eines Verfahrens 10 zur stromgütebasierten Energieverbrauchsregelung für ein Stromabnehmergerät. Nach dem Start 10a des Verfahrens 10 erfolgt in einem ersten Schritt 11 eine Erfassung von Parametern der Stromversorgung, beispielsweise über Messung von relevanten physikalischen Größen des Versorgungsstroms bzw. der Versorgungsspannung, die das Stromabnehmergerät zum Beispiel von einem Stromversorgungsnetz bezieht. Die erfassten Parameter dienen dann als Grundlage für die Ermittlung einer Stromgüte des über das Stromversorgungsnetz bezogenen Stroms. Die Stromgüte ist dabei ein zeitlich variabler Wert und die in Schritt 11 ermittelte Stromgüte stellt einen Momentanwert dar. Das Ermitteln der Stromgüte kann zum Beispiel mittels einer festen Berechnungsfunktion abhängig von den gemessenen Parametern der Stromversorgung erfolgen. In einer Variante können auch frühere gemessene Parameter berücksichtigt werden, zum Beispiel um übliche Schwankungen von einer signifikanten Verschlechterung zu unterscheiden.

In einem zweiten Schritt 12 erfolgt in Abhängigkeit von der in Schritt 11 ermittelten Stromgüte eine Auswahl einer Energieverbrauchsregel. Die Energieverbrauchsregel wird aus einer Vielzahl von vorbestimmten Energieverbrauchsregeln ausgewählt. Es kann auch vorgesehen sein, die Energieverbrauchsregel gemäß einer vorbestimmten Funktion von einem Wert der ermittelten Stromgüte abzuleiten. Die Energieverbrauchsregeln, aus denen ausgewählt werden kann, beziehen sich auf eine Ansteuerung der Energieversorgung des Stromabnehmergeräts, das heißt, die Energieverbrauchsregeln können beispielsweise Eigenschaften wie Zeitpunkt, Zeitdauer und/oder Menge des bezogenen Stroms betreffen, die das Stromabnehmergerät aus dem Stromversorgungsnetz bezieht. Die Energieverbrauchsregeln können vorgegeben oder konfigurierbar sein.

Dabei können die Energieverbrauchsregeln beispielsweise einen Stromverbrauch begrenzen, beispielsweise indem eine maximal zulässige Stromstärke für das Stromabnehmergerät festgelegt wird. Für eine Ladestation eines elektrisch betriebenen Fahrzeugs, ein Haushaltsgerät oder eine Klimaanlage kann beispielsweise festgelegt werden, dass der Strombezug 4 A oder 8 A statt maximal 16 A beträgt. Dadurch kann der entsprechende Leistungsbedarf des Stromabnehmergeräts zumindest temporär begrenzt werden.

Ebenso ist es möglich, dass die Energieverbrauchsregeln Anpassungen von Regelparametern betreffen, die sich indirekt auf den Strombezug auswirken. Beispielsweise kann vorgesehen sein, dass die Solltemperatur einer Klimaanlage oder eines Kühlschranks um eine gewisse Temperaturdifferenz heraufgesetzt wird. Zum Beispiel ist es bei Ladestationen für elektrische Fahrzeuge möglich, dass der Ziel-Ladewert des Energiespeichers des Fahrzeugs von 100% auf einen geringeren Wert, beispielsweise 90% heruntergesetzt wird, um die Gesamtleistung zu verringern. Die Informationen über die ausgewählten Energieverbrauchsregeln können dem Nutzer des Stromabnehmergeräts beispielsweise über Displays mitgeteilt werden.

In einem dritten Schritt 13 erfolgt eine Ansteuerung des Stromabnehmergeräts entsprechend der in Schritt 12 ausgewählten Energieverbrauchsregel. Dadurch kann bei einem ausgelasteten Stromversorgungsnetz eine "schonende" Belastung des Netzes erfolgen. Ein Vorteil des Verfahrens 10 besteht darin, dass keine aufwändige Kommunikationsinfrastruktur notwendig ist, da die Ermittlung der Stromgüte lokal auf Seiten des Stromabnehmergeräts erfolgt.

Fig. 2 zeigt eine schematische Darstellung eines Verfahrens 20 zur stromgütebasierten Energieverbrauchsregelung für ein Stromabnehmergerät. Nach dem Start 20a des Verfahrens 20 erfolgt in einem ersten Schritt 21 ähnlich dem Schritt 11 des Verfahrens 10 eine Erfassung von Parametern der Stromversorgung und daraus resultierend eine Ermittlung der momentanen Stromgüte. In einem zweiten Schritt 22 erfolgt eine Prüfung, ob die ermittelte Stromgüte einen erforderlichen Schwellwert überschreitet. Beispielsweise kann ein Vergleich der ermittelten Stromgüte mit einem vorbestimmten Stromgüteprofil erfolgen. Dieser Vergleich kann vorteilhafterweise vor dem Ausführen einer energierelevanten Aktion, beispielsweise dem Anschalten oder dem Wechsel eines Betriebsmodus des Stromabnehmergeräts erfolgen. Hierbei ist keine Datenkommunikation mit externen Informationsquellen notwendig.

Sollte sich in Abhängigkeit von dem Vergleich in Schritt 22 ergeben, dass die ermittelte Stromgüte einen erforderlichen Schwellwert nicht überschreitet, kann in einem Schritt 22b zu dem Schritt 21 zurückgekehrt werden. Das bedeutet, dass mit dem Ausführen der energierelevanten Aktion solange gewartet wird, bis die Stromgüte einen erforderlichen Sollwert erreicht. Hierbei kann eine Ermittlung der Stromgüte in Schritt 21 in periodischen Abständen erfolgen, um kurzfristige Schwankungen im Stromversorgungsnetz auszugleichen.

Sollte die Stromgüte in Schritt 22 den erforderlichen vorbestimmten Sollwert aufweisen, kann in einem Schritt 22a zu dem dritten Schritt 23 übergegangen werden, in dem die energierelevante Aktion ausgeführt wird. In Schritt 23 erfolgt ähnlich wie in Schritt 13 ein Ansteuern des Stromabnehmergeräts, beispielsweise durch Starten oder Anschalten des Stromabnehmergeräts oder durch Wechsel des Betriebsmodus des Stromabnehmergeräts, zum Beispiel durch Wechsel von einem Standby-Modus in einen Normalbetriebsmodus.

Fig. 3 zeigt eine schematische Darstellung eines Verfahrens 30 zur stromgütebasierten Energieverbrauchsregelung für ein Stromabnehmergerät. Nach dem Start 30a des Verfahrens 30 erfolgt in einem ersten Schritt 31 ähnlich dem Schritt 11 des Verfahrens 10 eine Erfassung von Parametern der Stromversorgung und daraus resultierend eine Ermittlung der momentanen Stromgüte. Die Schritte 32, 32a, 32b und 34 entsprechen dabei den Schritten 22, 22a, 22b und 23 des Verfahrens 20 in Fig. 2.

Das Verfahren 30 unterscheidet sich von dem Verfahren 20 in Fig. 2 dadurch, dass nach dem Schritt 32a ein Schritt 33 vorgesehen ist, in dem überprüft wird, ob zusätzlich über eine Datenkommunikationsschnittstelle Informationen eines externen Kommunikationspartners, beispielsweise des Betreibers eines Smart-Energy-Grids empfangen werden können bzw. worden sind. Wenn festgestellt wird, dass externe Informationen vorliegen, die ein Ausführen der energierelevanten Aktion in Schritt 33 verhindern, kann in einem Schritt 33b zu dem Schritt 31 zurückgekehrt werden, ohne dass die energierelevante Aktion ausgeführt wird. Sollte jedoch festegestellt werden, dass keine Konflikte vorliegen, kann in einem Schritt 33a zu Schritt 34 übergegangen werden, in dem ein Ansteuern des Stromabnehmergeräts erfolgt.

Fig. 4 zeigt eine schematische Darstellung eines Verfahrens 40 zur stromgütebasierten Energieverbrauchsregelung für ein Stromabnehmergerät. Nach dem Start 40a des Verfahrens 40 erfolgt in einem ersten Schritt 41 eine Überprüfung, ob externe Informationen eines Kommunikationsnetzbetreibers vorliegen. Die Informationen des Kommunikationsnetzbetreibers werden gemäß Verfahren 40 bevorzugt behandelt, so dass im Falle der Verfügbarkeit solcher Informationen in einem Schritt 41a zu einem Schritt 42 übergegangen wird, in dem überprüft wird, ob eine energierelevante Aktion in Schritt 43 gemäß der erhaltenen externen Informationen durchgeführt werden darf. Sollte dies der Fall sein, wird in einem Schritt 42a zu Schritt 43 übergegangen, in dem ein Ansteuern des Stromabnehmergeräts erfolgt. Sollten die Informationen ein Durchführen einer energierelevanten Aktion nicht zulassen, kann in einem Schritt 42b zu dem Schritt 41 zurückgekehrt werden.

Die Schritte 44, 45, 45a, 45b und 43 sind den Schritten 21, 22, 22a, 22b, 22b bzw. 23 des Verfahrens 23 in Fig. 2 ähnlich. Im Gegensatz zum Verfahren 20 sind die Schritte 44, 45, 45a und 45b jedoch nur als "Fall-Back"-Lösung, das heißt, als Ersatzoption vorgesehen, falls zumindest temporär keine externen Informationen aus dem Smart-Energy-Grid vorliegen.

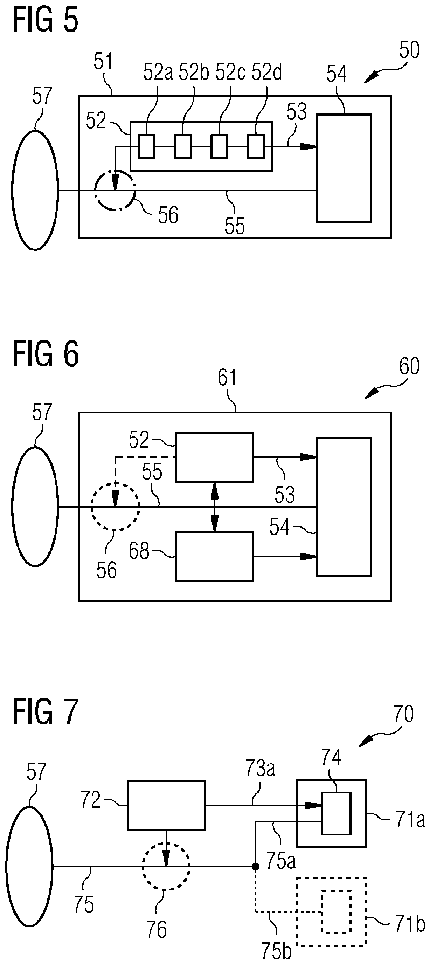

Fig. 5 zeigt eine schematische Darstellung eines Stromabnehmergeräts 51 mit einer Steuereinrichtung 52 zur stromgütebasierten Energieverbrauchsregelung. Das Stromabnehmergerät 51 bezieht dabei Strom aus einem Stromversorgungsnetz 57 über eine Stromversorgungsleitung 55. Das Stromabnehmergerät 51 kann eine Energieverbrauchsregeleinrichtung 54 aufweisen, welche dazu ausgelegt ist, in Abhängigkeit von einer durch die Steuereinrichtung 52 ausgewählten Energieverbrauchsregel die Energieversorgung des Stromabnehmergeräts 51 zu steuern.

Die Steuereinrichtung 52 umfasst eine Erfassungseinrichtung 52a, welche dazu ausgelegt ist, Parameter der Stromversorgung des Stromabnehmergeräts 51 zu erfassen, eine Ermittlungseinrichtung 52b, welche dazu ausgelegt ist, eine Stromgüte auf der Basis der erfassten Parameter zu ermitteln, eine Auswahleinrichtung 52c, welche dazu ausgelegt ist, eine einer Vielzahl von Energieverbrauchsregeln auf der Basis der ermittelten Stromgüte auszuwählen, und eine Ansteuereinrichtung 52d, welche dazu ausgelegt ist, das Stromabnehmergerät 51 auf der Basis der ausgewählten Energieverbrauchsregel anzusteuern.

Die Erfassungseinrichtung 52a kann dazu ausgelegt sein, die Parameter der Stromversorgung an einer Stelle 56 der Stromversorgungsleitung 55 zu messen. Beispielsweise kann die Stelle 56 an der Stromversorgungsleitung 55 einen Netzanschluss für das Stromabnehmergerät 51 darstellen. Über eine Steuerungsleitung 53 kann die Ansteuereinrichtung 52d der Steuereinrichtung 51 die Energieverbrauchsregeleinrichtung 54 ansteuern.

Die Ermittlungseinrichtung 52b kann über einen internen Speicher verfügen, in dem die Vielzahl an Energieverbrauchsregeln abgelegt ist. Die Energieverbrauchsregeln können dabei einstellbar abgespeichert sein, das heißt, dass von außen Änderungen an den Energieverbrauchsregeln vorgenommen werden können.

Fig. 6 zeigt eine schematische Darstellung eines Stromabnehmergeräts 61 mit einer Steuereinrichtung 52 zur stromgütebasierten Energieverbrauchsregelung. Das Stromabnehmergerät 61 unterscheidet sich von dem in Fig. 5 gezeigten Stromabnehmergerät 51 in Fig. 5 dadurch, dass zusätzlich eine Kommunikationseinrichtung 68 vorgesehen ist, welche dazu ausgelegt ist, eine Kommunikation mit einer externen Informationsquelle, beispielsweise dem Steuerserver eines Smart-Energy-Grids aufzubauen, in dem das Stromabnehmergerät 61 eingegliedert ist. Die Kommunikationseinrichtung 68 kann dazu ausgelegt sein, die Energieverbrauchsregeleinrichtung 54 anzusteuern. Dabei kann vorgesehen sein, dass die Kommunikationseinrichtung 68 die Energieverbrauchsregeleinrichtung 54 vorrangig vor der Steuereinrichtung 52 ansteuert, das heißt, dass die Steuereinrichtung eine Ersatzoption darstellt, falls die Kommunikationseinrichtung 68 keine Verbindung mit dem Smart-Energy-Grid herstellen kann, oder falls keine aktuellen Strombezugsinformationen über das Smart-Energy-Grid erhalten werden können.

Es kann auch vorgesehen sein, dass die Steuereinrichtung 52 und die Kommunikationseinrichtung 68 die Energieverbrauchsregeleinrichtung 54 gemeinsam ansteuern, das heißt, dass Steuersignale beider Einrichtungen beispielsweise logisch verschaltet werden können, um die Energieverbrauchsregeleinrichtung 54 entsprechend der Energieverbrauchsregeln und der externen Informationen des Smart-Energy-Grids anzusteuern. Zu diesem Zweck kann es vorgesehen sein, dass die Kommunikationseinrichtung 68 die externen Informationen an die Steuereinrichtung 52 übergibt und die Erfassungseinrichtung 52a der Steuereinrichtung 52 die externen Informationen erfasst und an die Auswahleinrichtung 52c übergibt. Die Auswahleinrichtung 52c kann dann auch auf der Basis der externen Informationen bzw. Steuerungsdaten die Auswahl der Energieverbrauchsregel treffen.

Fig. 7 zeigt eine schematische Darstellung eines Systems 70 zur stromgütebasierten Energieverbrauchsregelung mit einer Steuereinrichtung 72 und einer Vielzahl an Stromabnehmergeräten 71a, 71b. Die Steuereinrichtung 72 kann insbesondere den Steuereinrichtung 52 in Fig. 5 ähnlich sein und dazu ausgelegt sein, an einer Stelle 76 einer Versorgungsleitung 75 Parameter der Stromversorgung zu erfassen. Die Steuereinrichtung ermittelt die Stromgüte eines Stromversorgungsnetzes 57 und steuert über eine Steuerleitung 73a ein Stromabnehmergerät 71a an, welches über eine Energieverbrauchsregeleinrichtung 74 verfügt. Beispielsweise kann die Versorgungsleitung 75 die Hausanschlussleitung eines Gebäudes, beispielsweise eines Wohnhauses oder einer Fabrikanlage sein, die sich in mehrere Versorgungsleitungen 75a, 75b verzweigt, die im Inneren des Gebäudes mehrere Stromabnehmergeräte 71a, 71b mit Strom versorgen. Die Steuereinrichtung 72 ist in diesem Fall ein separates Gerät, welches für die Ansteuerung der verschiedenen Stromabnehmergeräte 71a, 71b verantwortlich ist. Beispielhaft sind in Fig. 7 lediglich zwei Stromabnehmergeräte 71a, 71b gezeigt, wobei jedoch jede andere Anzahl an Stromabnehmergeräten ebenso möglich ist.

## Patentansprüche

1. Verfahren zum stromgütebasierten Regeln eines Energieverbrauchs eines Stromabnehmergeräts (51; 61), mit den Schritten:
Erfassen von Parametern der Stromversorgung des Stromabnehmergeräts (51; 61);
Ermitteln einer Stromgüte auf der Basis der erfassten Parameter der Stromversorgung; und
Ansteuern des Stromabnehmergeräts (51; 61);
**gekennzeichnet durch** den Schritt
Auswählen einer Energieverbrauchsregel aus einer Vielzahl von Energieverbrauchsregeln auf der Basis der ermittelten Stromgüte mittels einer Auswahleinrichtung (52c), wobei die Vielzahl der Energieverbrauchsregeln Anpassungen von Regelparametern des Stromabnehmergeräts (51, 61) betreffen; und
das Ansteuern des Stromabnehmergeräts (51; 61) auf der Basis der ausgewählten Energieverbrauchsregel erfolgt.

2. Verfahren nach Anspruch 1, weiterhin mit den Schritten:
Vergleichen der ermittelten Stromgüte mit einem vorbestimmten Stromgüteprofil zum Ermitteln eines Sollwertparameters; und
Auswählen einer Energieverbrauchsregel auf der Basis des ermittelten Sollwertparameters.

3. Verfahren nach einem der Ansprüche 1 und 2, wobei die Vielzahl von Energieverbrauchsregeln ein Starten des Stromabnehmergeräts (51; 61), ein Betreiben des Stromabnehmergeräts (51; 61) bei begrenztem Strombezug, ein Betreiben des Stromabnehmergeräts (51; 61) im Standby-Betrieb und/oder ein Betreiben des Stromabnehmergeräts (51; 61) für eine begrenzte Zeitspanne umfasst.

4. Verfahren nach einem der Ansprüche 1 bis 3, weiterhin mit dem Schritt:
Erfassen von externen Steuerungsdaten zum Ansteuern des Stromabnehmergeräts (51; 61), wobei
das Auswählen einer Energieverbrauchsregel in Abhängigkeit von den externen Steuerungsdaten erfolgt.

5. Verfahren nach einem der Ansprüche 1 bis 4, wobei das Stromabnehmergerät (51; 61) einen elektrischen Energiespeicher eines elektrisch betriebenen Fahrzeugs, eine Ladesäule für elektrische betriebene Fahrzeuge, ein Haushaltsgerät, eine Klimaanlage oder eine Heizanlage umfasst.

6. Steuereinrichtung (52) zum stromgütebasierten Regeln eines Energieverbrauchs eines Stromabnehmergeräts (51; 61), mit:
einer Erfassungseinrichtung (52a), welche dazu ausgelegt ist Parameter der Stromversorgung des Stromabnehmergeräts (51; 61) zu erfassen;
einer Ermittlungseinrichtung (52b), welche dazu ausgelegt ist, eine Stromgüte auf der Basis der erfassten Parameter zu ermitteln;
**gekennzeichnet durch**
eine Auswahleinrichtung (52c), welche dazu ausgelegt ist, eine einer Vielzahl von Energieverbrauchsregeln auf der Basis der ermittelten Stromgüte auszuwählen,
wobei die Vielzahl der Energieverbrauchsregeln Anpassungen von Regelparametern des Stromabnehmergeräts (51, 61) betreffen; und
die Ansteuereinrichtung (52d), dazu ausgelegt ist, das Stromabnehmergerät (51; 61) auf der Basis der ausgewählten Energieverbrauchsregel anzusteuern.

7. Steuereinrichtung (52) nach Anspruch 6, wobei die Ermittlungseinrichtung (52b) weiterhin dazu ausgelegt ist, die ermittelte Stromgüte mit einem vorbestimmten Stromgüteprofil zum Ermitteln eines Sollwertparameters zu vergleichen, und wobei die Auswahleinrichtung (52c) weiterhin dazu ausgelegt ist, eine Energieverbrauchsregel auf der Basis des ermittelten Sollwertparameters auszuwählen.

8. Steuereinrichtung (52) nach einem der Ansprüche 6 und 7, wobei die Vielzahl von Energieverbrauchsregeln ein Starten des Stromabnehmergeräts (51; 61), ein Betreiben des Stromabnehmergeräts (51; 61) bei begrenztem Strombezug, ein Betreiben des Stromabnehmergeräts (51; 61) im Standby-Betrieb und/oder ein Betreiben des Stromabnehmergeräts (51; 61) für eine begrenzte Zeitspanne umfasst.

9. Steuereinrichtung (52) nach einem der Ansprüche 6 bis 8, wobei die Erfassungseinrichtung (52a) dazu ausgelegt ist, externe Steuerungsdaten zum Ansteuern des Stromabnehmergeräts (51; 61) zu erfassen, wobei die Auswahleinrichtung (52c) weiterhin dazu ausgelegt ist, eine Energieverbrauchsregel in Abhängigkeit von den externen Steuerungsdaten auszuwählen.

10. Steuereinrichtung (52) nach einem der Ansprüche 6 bis 9, wobei das Stromabnehmergerät (51; 61) einen elektrischen Energiespeicher eines elektrisch betriebenen Fahrzeugs, eine Ladesäule für elektrische betriebene Fahrzeuge, ein Haushaltsgerät, eine Klimaanlage oder eine Heizanlage umfasst.

11. Stromabnehmergerät (51; 61), mit:
einer Steuereinrichtung (52) nach einem der Ansprüche 6 bis 10; und
einer Energieverbrauchsregeleinrichtung (54), welche dazu ausgelegt ist, in Abhängigkeit von einer durch die Steuereinrichtung (52) ausgewählten Energieverbrauchsregel die Energieversorgung des Stromabnehmergeräts (51; 61) zu steuern.

12. System (70) zum stromgütebasierten Regeln des Energieverbrauchs einer Vielzahl von Stromabnehmergeräten (71a, 71b) mit:
einer Steuereinrichtung (72) nach einem der Ansprüche 6 bis 10; und
einer Vielzahl von Stromabnehmergeräten (71a, 71b), für welche die Steuereinrichtung (72) spezifische Energieverbrauchsregeln in Abhängigkeit einer ermittelten Stromgüte und der Art des Stromabnehmergeräts (71a, 71b) auswählt.

13. System (70) nach Anspruch 12, wobei
die Vielzahl von Stromabnehmergeräten (71a, 71b) Haushaltsgeräte, Klimaanlagen und/oder Heizanlagen eines Gebäudes umfasst, und wobei die Steuereinrichtung (72) dazu ausgelegt ist, die Stromgüte an einem Stromversorgungsanschluss (76) des Gebäudes zu ermitteln.

## Claims

1. Method for current-quality-based regulation of an energy consumption of a current collector device (51; 61), having the steps:
detecting parameters of the power supply of the current collector device (51; 61);
determining a current quality on the basis of the detected parameters of the power supply; and
activating the current collector device (51; 61);
**characterised by** the step
selecting an energy consumption rule from a plurality of energy consumption rules on the basis of the determined current quality using a selection facility (52c), wherein the plurality of energy consumption rules relates to adjustments to regulation parameters of the current collector device (51; 61); and
the activation of the current collector device (51; 61) is carried out on the basis of the selected energy consumption rule.

2. Method according to claim 1, further having the steps:
comparing the determined current quality with a predetermined current quality profile for determining a target value parameter; and
selecting an energy consumption rule on the basis of the determined target value parameter.

3. Method according to one of claims 1 and 2, wherein the plurality of energy consumption rules comprises starting the current collector device (51; 61), operating the current collector device (51; 61) with a restricted volume of purchased electricity, operating the current collector device (51; 61) in standby mode and/or operating the current collector device (51; 61) for a restricted period of time.

4. Method according to one of claims 1 to 3, further having the step:
detecting external control data for activating the current collector deice (51; 61), wherein
the selection of an energy consumption rule is carried out as a function of the external control data.

5. Method according to one of claims 1 to 4, wherein the current collector device (51; 61) comprises an electric energy store of an electrically operated vehicle, a column load for electrically operated vehicles, a domestic appliance, an air-conditioning system or a heating system.

6. Control device (52) for current-quality-based regulation of an energy consumption of a current collector device (51; 61), having:
a detection device (52a), which is designed to detect parameters of the power supply of the current collector device (51; 61);
a determination facility (52b) which is designed to determine a current quality on the basis of the detected parameters;
**characterised by**
a selection facility (52c), which is designed to select a plurality of energy consumption rules on the basis of the determined current quality,
wherein the plurality of the energy consumption rules relates to adjustments to regulation parameters of the current collector device (51, 61); and
the activation device (52d) is designed to activate the current collector device (51; 61) on the basis of the selected energy consumption rule.

7. Control facility (52) according to claim 6, wherein the determination facility (52b) is also designed to compare the determined current quality with a predetermined current quality profile for determining target value parameter, and wherein the selection facility (52c) is also designed to select an energy consumption rule on the basis of the determined target value parameter.

8. Control facility (52) according to one of claims 6 and 7, wherein the plurality of energy consumption rules comprises starting the current collector device (51; 61), operating the current collector device (51; 61) with a limited volume of purchased electricity, operating the current collector device (51; 61) in standby mode and/or operating the current collector device (51; 61) for a limited period of time.

9. Control facility (52) according to one of claims 6 to 8, wherein the detection facility (52a) is designed to detect external control data for activating the current collector device (51; 61), wherein the selection facility (52c) is also designed to select an energy consumption rule as a function of the external control data.

10. Control facility (52) according to one of claims 6 to 9, wherein the current collector device (51; 61) comprises an electric energy store of an electrically operated vehicle, a column load for electrically operated vehicles, a domestic appliance, an air-conditioning system or a heating system.

11. Current collector device (51; 61) having:
a control facility (52) according to one of claims 6 to 10; and
an energy consumption regulating facility (54), which is designed to control the energy supply of the current collector deice (51; 61) as a function of an energy consumption rule selected by the control facility (52).

12. System (70) for current-quality-based regulation of the energy consumption of a plurality of current collector devices (71a, 71b) having:
a control facility (72) according to one of claims 6 to 10; and
a plurality of current collector devices (71a, 71b), for which the control facility (72) selects specific energy consumption rules as a function of a determined current quality and the type of current collector device (71a, 71b).

13. System (70) according to claim 12, wherein
the plurality of current collector devices (71a, 71b) comprises domestic appliances, air-conditioning systems and/or heating systems of a building, and wherein the control facility (72) is designed to determine the current quality at a power supply connection (76) of the building.

## Revendications

1. Procédé pour réguler une consommation d'énergie d'un appareil collecteur de courant (51 ; 61) sur la base de la qualité du courant, comportant les étapes suivantes :
- détection de paramètres de l'alimentation en courant de l'appareil collecteur de courant (51 ; 61) ;
- détermination d'une qualité de courant sur la base des paramètres détectés de l'alimentation en courant ; et
- commande de l'appareil collecteur de courant (51 ; 61), **caractérisé par** l'étape suivante :
- sélection d'une règle de consommation d'énergie parmi une pluralité de règles de consommation d'énergie sur la base de la qualité de courant déterminée au moyen d'un dispositif de sélection (52c), la pluralité des règles de consommation d'énergie concernant des adaptations de paramètres de régulation de l'appareil collecteur de courant (51, 61) ; et
- commande de l'appareil collecteur de courant (51 ; 61) sur la base de la règle de consommation de courant sélectionnée.

2. Procédé selon la revendication 1, comportant en outre les étapes suivantes :
- comparaison de la qualité de courant déterminée avec un profil de qualité de courant prédéterminé pour déterminer un paramètre de valeur de consigne et
- sélection d'une règle de consommation de courant sur la base du paramètre de valeur de consigne déterminé.

3. Procédé selon l'une des revendications 1 et 2, la pluralité de règles de consommation d'énergie comprenant un lancement de l'appareil collecteur de courant (51 ; 61), une exploitation de l'appareil collecteur de courant (51 ; 61) avec consommation de courant limitée, une exploitation de l'appareil collecteur de courant (51 ; 61) en mode veille et/ou une exploitation de l'appareil collecteur de courant (51 ; 61) pour une durée limitée.

4. Procédé selon l'une des revendications 1 à 3, comportant en outre l'étape suivante :
- détection de données de commande externes pour commander l'appareil collecteur de courant (51 ; 61), la sélection d'une règle de consommation de courant se faisant en fonction de données de commande externes.

5. Procédé selon l'une des revendications 1 à 4, l'appareil collecteur de courant (51 ; 61) comprenant un accumulateur d'énergie électrique d'un véhicule électrique, une borne de recharge pour véhicules électriques, un appareil ménager, une installation de climatisation ou une installation de chauffage.

6. Dispositif de commande (52) pour réguler une consommation d'énergie d'un appareil collecteur de courant (51 ; 61) sur la base de la qualité du courant, comportant les étapes suivantes :
- un dispositif de détection (52a) conçu pour détecter des paramètres de l'alimentation en courant de l'appareil collecteur de courant (51 ; 61) ;
- un dispositif de détermination (52b) conçu pour déterminer une qualité de courant sur la base des paramètres détectés, **caractérisé par** :
- un dispositif de sélection (52c) conçu pour sélectionner une règle de consommation d'énergie parmi une pluralité de règles de consommation d'énergie sur la base de la qualité de courant déterminée, la pluralité des règles de consommation d'énergie concernant des adaptations de paramètres de régulation de l'appareil collecteur de courant (51, 61) ; et
- le dispositif de commande (52d) conçu pour commander l'appareil collecteur de courant (51 ; 61) sur la base de la règle de consommation de courant sélectionnée.

7. Dispositif de commande (52) selon la revendication 6, le dispositif de détermination (52b) étant en outre conçu pour comparer la qualité de courant déterminée avec un profil de qualité de courant prédéterminé pour déterminer un paramètre de valeur de consigne et le dispositif de sélection (52c) étant en outre conçu pour sélectionner une règle de consommation de courant sur la base du paramètre de valeur de consigne déterminé.

8. Dispositif de commande (52) selon l'une des revendications 6 et 7, la pluralité de règles de consommation d'énergie comprenant un lancement de l'appareil collecteur de courant (51 ; 61), une exploitation de l'appareil collecteur de courant (51 ; 61) avec consommation de courant limitée, une exploitation de l'appareil collecteur de courant (51 ; 61) en mode veille et/ou une exploitation de l'appareil collecteur de courant (51 ; 61) pour une durée limitée.

9. Dispositif de commande (52) selon l'une des revendications 6 à 8, le dispositif de détection (52a) étant conçu pour détecter des données de commande externes pour commander l'appareil collecteur de courant (51 ; 61), le dispositif de sélection (52c) étant en outre conçu pour sélectionner une règle de consommation de courant en fonction des données de commande externes.

10. Dispositif de commande (52) selon l'une des revendications 6 à 9, l'appareil collecteur de courant (51 ; 61) comprenant un accumulateur d'énergie électrique d'un véhicule électrique, une borne de recharge pour véhicules électriques, un appareil ménager, une installation de climatisation ou une installation de chauffage.

11. Appareil collecteur de courant (51 ; 61), comportant :
- un dispositif de commande (52) selon l'une des revendications 6 à 10 et
- un dispositif de régulation de consommation de courant (54) conçu pour commander l'alimentation en énergie de l' appareil collecteur de courants (51 ; 61) en fonction d'une règle de consommation de courant sélectionnée par le dispositif de commande (52).

12. Système (70) pour réguler la consommation d'énergie d'une pluralité d'appareils collecteurs de courant (71a ; 71b) sur la base de la qualité du courant, comportant :
- un dispositif de commande (72) selon l'une des revendications 6 à 10 et
- une pluralité d'appareils collecteurs de courant (71a, 71b) pour lesquels le dispositif de commande (72) sélectionne des règles de consommation d'énergie spécifiques en fonction d'une qualité de courant déterminée et du type de l'appareil collecteur de courant (71a, 71b).

13. Système (70) selon la revendication 12, la pluralité d'appareils collecteurs de courant (71a, 71b) incluant des appareils ménagers, des installations de climatisation et/ou des installations de chauffage d'un bâtiment et le dispositif de commande (72) étant conçu pour déterminer la qualité de courant au niveau d'un raccordement d'alimentation en courant (76) du bâtiment.
